**Europäisches Patentamt**

(19) **European Patent Office**　　　(11) Veröffentlichungsnummer: **0 178 365**

**Office européen des brevets**　　　　　　　　　　**B1**

(12) # EUROPÄISCHE PATENTSCHRIFT

(45) Veröffentlichungstag der Patentschrift:
25.01.89

(51) Int. Cl.⁴: **A 01 N 59/06,** A 01 N 59/02 //
(A01N59/06, 59:02)

(21) Anmeldenummer: **84890160.9**

(22) Anmeldetag: **28.08.84**

(54) **Mittel zur Bekämpfung des Waldsterbens.**

(43) Veröffentlichungstag der Anmeldung:
**23.04.86 Patentblatt 86/17**

(73) Patentinhaber: **Dorfmann, Bernhard,
Breitenfurterstrasse 511, A-1237 Wien (AT)**

(45) Bekanntmachung des Hinweises auf die Patenterteilung:
**25.01.89 Patentblatt 89/4**

(72) Erfinder: **Wenger, Franz Xaver, Zenostrasse 5,
D-8230 Bad Reichenhall (DE)**

(84) Benannte Vertragsstaaten:
**AT BE CH FR GB IT LI NL SE**

(74) Vertreter: **Haft, Berngruber, Czybulka, Postfach 14
02 46 Hans- Sachs- Strasse 5, D-8000 München 5
(DE)**

(56) Entgegenhaltungen:
**AT-B-309 140
DE-A-2 646 406
DE-A-3 308 183**

**CHEMICAL ABSTRACTS, Band 102, Nr. 3, 21. Januar
1985, Seite 195, Nr. 18940r, Columbus, Ohio, US; U.
KRONE u.a.: "Pyrotechnically generated calcium
and magnesium aerosols (method of generation
and application in forest ecosystems damaged by
air pollution")**

**Die Akte enthält technische Angaben, die nach
dem Eingang der Anmeldung eingereicht wurden
und die nicht in dieser Patentschrift enthalten sind.**

EP 0 178 365 B1

**Beschreibung**

Die Erfindung bezieht sich auf die Verwendung eines Mittels zur Beseitigung und Verhinderung von für das Waldsterben typischen Schäden an Bäumen.

Der Kampf gegen das Waldsterben ist zu einer der wichtigsten Aufgaben der Menschheit geworden. Obgleich die eigentlichen Ursachen des Waldsterbens unbekannt sind, herrscht in der Fachwelt weitgehend Einigkeit darüber, daß die Luftverunreinigung einen maßgeblichen Faktor darstellt (vgl. "Der Spiegel" vom 14. 2. 1983, Seiten 72 bis 92; "Süddeutsche Zeitung" vom 4. 2. 1983, Seite 27 und vom 25. 2. 1983, Seite 11).

Charakteristisch für das Waldsterben sind Blattschäden und Blattverluste. Kranke Fichten fallen durch Farbveränderungen des Blattgrüns in Richtung gelb oder grau auf. Es wird eine starke Vergilbung der Krone beobachtet. Erkrankte Fichten weisen daher typische Magnesiummangelsymptome auf ("Süddeutsche Zeitung" vom 25. 2. 1983, Seite 11). Wachstumsstörungen sind ein weiteres typisches Schadbild für das Waldsterben. So bilden kranke Fichten auf der Oberseite ihrer Äste 1. Ordnung sogenannte Ersatz- oder Angsttriebe. Diese Triebe sind mehrjährig, behalten einige Jahre lang sattgrüne Nadeln und können sich bei älteren Richten zu Hexenbesen-ähnlichen Gebilden entwickeln.

Ein Kernproblem der Luftverschmutzung stellt der sogenannte "saure Regen" dar. Diese sauren Niederschläge sind insbesondere auf Schwefeldioxid ($SO_2$) und Stickoxide ($NO_x$) Zurück zu führen bzw. auf die Konversionsprodukte dieser Gase, nämlich Schwefelsäure ($H_2SO_4$) und Sulfate bzw. Salpetersäure ($HNO_3$) und Nitrate. Nach G. Glatzel "Saure Niederschläge - Vorkommen und Auswirkungen (Österreichische Chemie-Zeitschrift", Februar 1983, Seite 33 bis 43, insbesondere Seite 39 bis 41) ist die Wirkung von sauren Niederschlägen in den einzelnen Pufferbereichen des Bodens verschieden: Kalkhaltige Böden werden durch Säure zu fuhr über Niederschläge rasch entkalkt. Solange aber Calciumcarbonat vorhanden ist, verschiebt sich der pH-Wert nur wenig und durch Säurezufuhr alleine treten keine unmittelbaren Bodenschäden auf. Durch die rasche Verwitterung können sogar zusätzliche Pflanzennährstoffe freigesetzt werden. Im Gegensatz dazu vermögen saure Niederschläge Böden, deren Ausgangs-pH zwischen etwa 4,5 und 6,0 liegt, extrem zu schädigen. Importierte Säuren, deren Anionen nicht in die lebende und tote Biomasse eingebaut werden, verlassen nach Austauschreaktionen der Protonen mit Kationen an den Bodenkolloiden den Boden im Sickerwasser. Dabei werden vor allem Calcium- und Magnesiumionen mitgenommen. In den Quellwässern steigt die permanente Härte. Da in diesem pH-Bereich die Boden schwach gepuffert sind, kommt es zu rasch fortschreitender Versauerung.

Die Maßnahmen, die bisher zur Verhinderung des Waldsterbens vorgeschlagen worden sind, bestehen in einer Herab-Setzung der Schwefeldioxid- und Stickoxid-Immisionen, in einer Kalkung des Bodens in regelmäßigen Abständen sowie im Düngen des Bodens. Alle diese Maßnahmen sind jedoch außerordentlich kostspielig. Was die Kalkung angeht, so wird allein für die Bundesrepublik Deutschland ein jährlicher Aufwand von 6 Milliarden veranschlagt, um das Waldsterben aufzuhalten ("Süddeutsche Zeitung" vom 4. 2. 1983). Weiterhin ist bei einer plötzlichen großflächigen Kalkung eine Nitratfreisetzung und damit eine Grundwasserverseuchung zu befürchten ("Österreichische Cheme-Zeitschrift", Februar 1983, Seite 41). Dabei ist bei kalkhaltigen Böden, wie in den Alpen, ein Erfolg der Kalkung von vornherein äußerst zweifelhaft.

Noch mehr umstritten ist die Düngung des Bodens. Denn einerseits werden auch beim Düngen höchst unerfreuliche Nebenwirkungen für das Bodensystem erwartet ("Süddeutsche Zeitung" vom 25. 2. 1983, Seite 11), und andererseits erfordert ein Düngungsprogramm noch gigantischere Ausgaben als die Kalkung.

Trotz intensivster, fast fieberhafter Bemühungen der Fachwelt in den letzten Jahren, ist es also bisher nicht gelungen, ein Mittel anzugeben, das beim Kampf gegen das Waldsterben eine hinreichende Aussicht auf Erfolg verspricht, geschweige denn ein kostenmäßig vertretbares Mittel. Vielmehr stellt die Herabsetzung der Schwefeldioxid- und Stickstoffoxid-Immisionen bisher die einzige Maßnahme dar, um dem Waldsterben zumindest nach einigen Jahren ein Ende zu bereiten.

Es sind Nährlösungen für Wasserkulturen bekannt, die neben einer Reihe anderer Salze Magnesiumsulfat enthalten, beispielsweise die Knopsche Lösung oder die von der Cronesche Lösung. Der Nährstoffhaushalt von Waldökosystemen ist jedoch weitaus komplizierter als der solcher Wassersysteme. So nehmen neben den Pflanzen Ton- und Humuskolloide, Vegetationsabfälle, Bodenpilze und bakterien, bodenwühlende Tiere und Vieles andere mehr am Haushalt des Waldbodens teil.

Der Erfindung liegt die Aufgabe zugrunde, ein Mittel anzugeben, mit dem das Waldsterben mit hohen Erfolgschancen in relativ kurzer Zeit bekämpft werden kann, und zwar mit relativ geringen Kosten, sowohl hinsichtlich der Materialkosten wie hinsichtlich der Kosten des Aufbringens auf die gefährdeten oder erkrankten Waldgebiete.

Diese Aufgabe wird erfindungsgemäß dadurch gelöst, daß als solches Mittel ein Mittel verwendet wird, das Magnesiunsulfat und Natriumsulfat enthält.

Magnesiumsulfat wird insbesondere in Form von Bittersalz ($MgSO_4 \cdot 7H_2O$) und Natriumsulfat in Form von Glaubersalz ($Na_2SO_4 \cdot 10\,H_2O$) verwendet Bittersalz sowie Glaubersalz kommen in der Natur in Form großer Lager vor. Sie sind daher zu relativ geringen Kosten erhältlich.

Diese Salze werden vorteilhaft in Form von streufähigen trockenen Salzen auf den Waldboden gestreut. Da sie im trockenen Zustand nicht klebrig sind, ist eine Bildung von Salzkrusten an den Blättern oder Nadeln der Bäume weitgehend verhindert. Eine derartige Krustenbildung mit einer weiteren starken Beschädigung der Bäume tritt hingegen bei der Kalkung auf.

Das erfindungsgemäß verwendete Mittel braucht nur einmal jährlich auf den Waldboden aufgebracht zu werden, vorzugsweise im Frühjahr vor der Assimilation, d. h. vor dem Saftaufstieg der Bäume. Bei der Behandlung von Wäldern wird das erfindungsgemäße Mittel vorzugsweise vollflächig aufgebracht, und zwar in einer solchen Menge, daß die Menge der Magnesium-, Natrium- und Sulfat-Ionen insgesamt 10 bis 500 kg, vorzugsweise 50 bis 200 kg je ha beträgt. Bei einzelstehenden Bäumen, z. B. in Gärten, wird eine Menge dieser Ionen von insgesamt 10 bis 200 g im Bodenbereich der Kronentraufe jedes Baumes aufgebraucht, wobei diese Menge insbesondere von der Größe des Baumes bzw. der Kronentraufe abhängig ist.

Statt in Form fester Salze kann das erfindungsgemäß verwendete Mittel auch in Form einer sprühfähigen wässrigen Suspension oder Lösung auf den Waldboden aufgebracht werden. Mit dem erfindungsgemäß verwendeten Mittel sind bei einmaliger Anwendung bereits wenige Monate nach der Assimilation zumindest die Blattschäden und Blattverluste erkrankter Bäume beseitigt.

Die Wirkung des erfindungsgemäß verwendeten Mittels wurde rein empirisch festgestellt, wie die nachstehenden Beispiele zeigen, die die Erfindung zugleich näher erläutern.

Zu bemerken ist, daß, wenn das im erfindungsgemäß verwendeten Mittel enthaltene Magnesiumsulfat zum Teil in das Grundwasser gelangt, dies keine schädlichen Folgen hat, vielmehr Magnesiumionen in geringer Konzentration im Trinkwasser sogar erwünscht sind.

Das erfindungsgemäß verwendete Mittel kann auch im Winter aufgebracht werden, da es eine Gefrierpunktserniedrigung bewirkt, dringt es nämlich auch bei Temperaturen unter 0°C in den Boden ein. Die Möglichkeit des Aufbringens auch im Winter vergrößert die Flexibilität bei der Einteilung der Arbeitskräfte.

Falls eine Erkrankung von Bäumen an Straßen vorliegt oder zu befürchten ist, kann das erfindungsgemäß verwendete Mittel auch auf Straßen gestreut werden, um zunächst die Bildung von Schnee- und Eisglätte zu verhindern, und um dann in den den Straßen benachbarten Bodenbereich einzudringen.

Es hat sich auch gezeigt, daß das erfindungsgemäß verwendete Mittel zu einer hervorragenden Kutikularwachs-Bildung führt.

Die Kutikularwachs-Bildung schützt die Blattorgane vor den Folgen saurer Niederschläge. Insbesondere verhindert sie nicht nur eine Nährstoffauswaschung, wie z. B. von Magnesium oder Calcium, aus den Blattorganen, sondern auch eine zu starke kutikuläre Verdunstung und damit eine kontinuierliche Wasserabgabe (vgl. "Österreichische Chemie-Zeitschrift" a. o. O. S. 37, rechte Spalte).

**Beispiel 1**

Mehrere serbische Fichten (Picea omorika), von denen eine auf dem beigefügten, als Figur 1 bezeichneten Foto wiedergegeben ist, weisen gegenwärtig eine Höhe von ca. sechs Metern auf. Sie befinden sich wenige Meter von einer stark befahrenen Straße entfernt, d. h. sie sind einer hohen Schadstoffimmision, insbesondere einer hohen Stickoxid- und Schwermetallimmision ausgesetzt. Die Fichten wiesen bereits zwei Jahre nach der Pflanzung bis zu 15 % braune Nadeln auf. Im vierten Jahr wurden im Frühjahr vor Beginn der Assimilation im Bereich der Kronentraufe jeder Fichte ca. 50 g Magnesiumsulfat in Form von Bittersalz und ca. 50 g Natriumsulfat in Form von Glaubersalz ausgestreut. Bereits nach etwa einem Vierteljahr war die Nadelbräune verschwunden. Ein weiterer Nadelabfall war nicht festzustellen. Figur 1 zeigt beispielhaft für die tibrigen Fichten den einwandfreien Gesundheitszustand einer der so behandelten Fichten.

**Beispiel 2**

Zwei Tannen und zwei Fichten wurden auf einer Dachterrasse in Trögen von 60 cm Länge, 50 cm Breite und 35 cm Höhe gepflanzt. Sie weisen eine Größe von etwa zwei Metern auf. Der Standort der Pflanzen ist einer extrem starken Schwefeldioxidimmision ausgesetzt. Die beiden Tannen und beiden Fichten wurden sechs Jahre lang beobachtet. Im zweiten Jahr nach der Pflanzung bekamen die Bäume bis zu 15 % braune Nadeln und das Absterben stand bevor. Jedem Trog wurde dann im Frühjahr vor der Assimilation jeweils eine Menge von ca. 5 g Magnesiumsulfat in Form von Bittersalz und ca. 5 g Natriumsulfat in Form von Glaubersalz zugegeben. Bereits nach einem Vierteljahr war die Nadelbräune verschwunden und der Nadelabfall blieb aus. Figur 2 a und 2 b, die die Fotographien einer der so behandelten Tannen wiedergeben, zeigen beispielhaft deren ausgezeichneten Gesundheitszustand.

**Vergleichsbeispiel 1**

Die beiden Tannen und Fichten des Beispiels 2 wurden im zweiten und dritten Jahr mit einem herkömmlichen Düngemittel, nämlich Nitrophoska, gedüngt. Dies bewirkte zwar ein Höhenwachstum, die Braunfärbung und der Nadelabfall waren aber weiterhin feststellbar.

**Vergleichsbeispiel 2**

Gegenüber den in Beispiel 1 genannten serbischen Fichten befinden sich auf der gegenüberliegenden Straßenseite ebenfalls nur wenige Meter von der Straße entfernt mehrere serbische Fichten, von denen eine beispielhaft auf den beigefügten, als Figur 3 a bis 3 c bezeichneten Fotographien wiedergegeben ist. Diese Fichten wurden völlig sich selbst überlassen, d. h. sie wurden weder gedüngt noch mit dem erfindungsgemäßen Mittel behandelt. Wie Figur 3 a bis c zu entnehmen ist, weisen die Fichten eine Reihe von Symptomen auf, die für das Waldsterben typisch sind. So zeigt Figur 3 a, die das Gesamtbild der erkrankten Fichte wiedergibt, deutlich die abgestorbene Krone. Figur 3 b zeigt die Veränderung des Blattgrüns in Richtung gelb und grau dieser Fichte sowie Hexenbesen-ähnliche Gebilde, die durch Ersatztriebe hervorgerufen werden, und Figur 3 c läßt die starken Nadelverluste klar erkennen.

**Patentanspruch**

Verwendung eines Mittels mit einem Gehalt an Magnesiumsulfat und Natriumsulfat zur Beseitigung und Verhinderung von für das Waldsterben typischen Schäden an Bäumen.

**Claim**

Use of an agent containing magnesium sulfate and sodium sulfate for removing and preventing the damages of trees typical for the dying-off of woodland.

**Revendication**

Utilisation d'un agent contenant une teneur de magnésium sulfate et de sodium sulfate pour faire disparaître et prevenir des dégats des arbres typiques pour la mort des forets.